# EUROPEAN PATENT APPLICATION

(11) **EP 3 280 093 A1**
(43) Date of publication of application: **07.02.2018**
(21) Application number: 16782554.6
(22) Date of filing: 31.03.2016
(51) Int. Cl.: H04L 12/24

(54) **REGISTRATION METHOD AND APPARATUS**

(30) Priority: 20.04.2015 CN 201510189256
(71) Applicant: ZTE Corporation, Shenzhen, Guangdong 518057 (CN)
(72) Inventor: LI, Mingsheng, Shenzhen Guangdong 518057 (CN); GENG, Dan, Shenzhen Guangdong 518057 (CN); MA, Zhuang, Shenzhen Guangdong 518057 (CN)
(74) Representative: Regimbeau
(86) International application number: PCT/CN2016/078137
(87) International publication number: WO 2016/169406

(57) **Abstract**

The present invention discloses a method and an apparatus for implementing registration. The method includes: tuning, by optical network units (ONUs), own reception wavelengths to a downlink wavelength corresponding to any one of time-wavelength division multiplexing (TWDM) channels; and receiving, from optical line terminals (OLTs) by the ONUs, downlink frames containing operator information, judging that the operator information in the received downlink frames is same as operator information preconfigured in the ONUs, searching for an uplink wavelength corresponding to a current received wavelength in a corresponding relationship between the uplink wavelength and the downlink wavelength received from the OLTs, and tuning own uplink wavelengths to the searched uplink wavelength for registration.

## Description

### TECHNICAL FIELD

The present invention relates to but not limited to a passive optical network (PON).

### BACKGROUND

With development of network technologies, networks can be used to transmit a large number of voices, data, videos and other services. Therefore, demands for bandwidth are improved continuously, and the PON is generated in the demands.

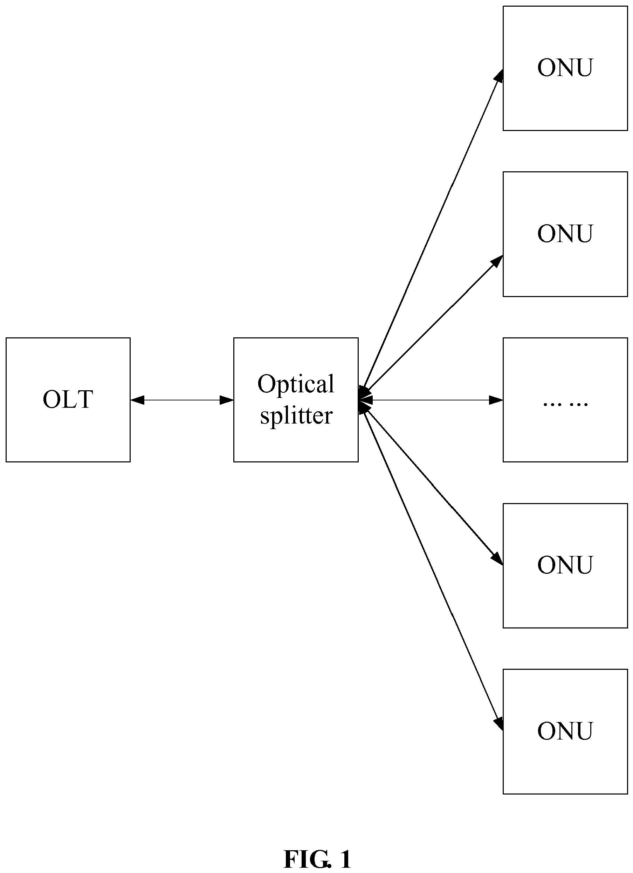

Fig. 1 is a topological structure diagram illustrating a PON system. As shown in Fig. 1, the PON system is composed of an optical line terminal (OLT) on an office side as well as a plurality of optical network units (ONUs) and optical distribution networks (ODNs) on a user side, and usually adopts a point-to-multipoint network structure. The ODNs are composed of single-mode optical fibers, optical splitters, optical connectors and other passive optical devices, and provide optical transmission media for physical connection between the OLT and each ONU.

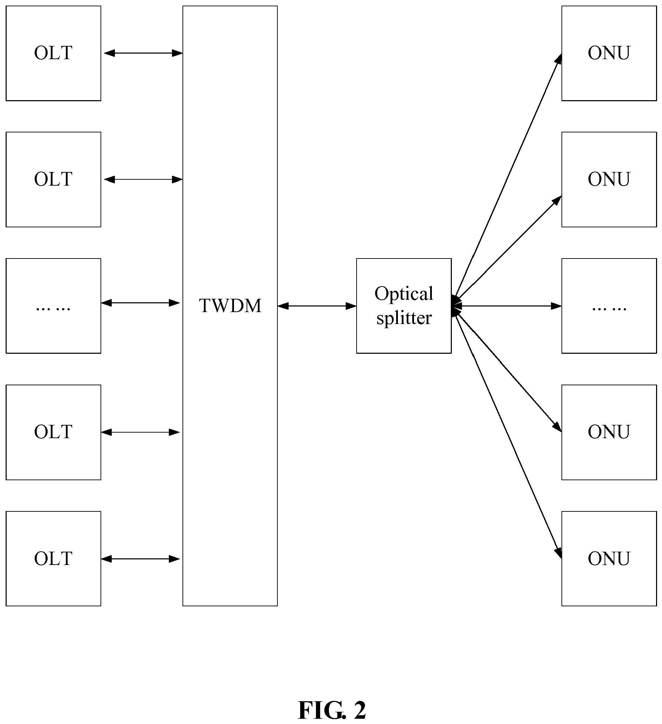

With further increase of bandwidth demands, a time-wavelength division multiplexing (TWDM) PON system is proposed. Fig. 2 is a topological structure diagram illustrating a TWDM PON system. As shown in Fig. 2, the TWDM PON system is composed of a plurality of OLTs and ODNs on the office side as well as a plurality of ONUs on the user side. The TWDM PON system has a plurality of TWDM channels. Each OLT and a group of ONUs work in one TWDM channel. Each TWDM channel includes a downlink wavelength channel and one or more uplink wavelength channels. One OLT manages a group of ONUs in each TWDM channel. A group of ONUs adopt the same uplink wavelength to transmit uplink data and adopt the same downlink wavelength to receive downlink data. Different ONUs in the same group of ONUs transmit the uplink data in a time division multiplexing manner. The downlink wavelengths corresponding to different TWDM channels are different. The uplink wavelengths corresponding to each group of ONUs managed by different OLTs are also different. Each ONU transmits the uplink data in a specific uplink time slot according to commands of the OLTs.

In order to make better use of laid ODN resources, many operators can share ODN devices in one PON system. Each operator uses some TWDM channels in the TWDM PON system. In different ODNs, the TWDM channels used by the operators may be the same or different. This is called an open access network. In such an open access network, when one ODN of a cell has a plurality of TWDM channels and many operators use different TWDM channels, ONUs need to be registered to the correct TWDM channels managed by the operators to perform service transmission when new ONUs are online.

A method for implementing registration in a relevant technology generally includes: pre-storing a serial number in each ONU; tuning, by the ONU, own reception wavelength to the downlink wavelength corresponding to any TWDM, searching for the uplink wavelength corresponding to the own reception wavelength from a corresponding relationship between the uplink wavelength and the downlink wavelength received from the OLT when receiving a downlink frame containing bandwidth distribution information from each OLT, and transmit the own stored serial number to the OLT by using the searched uplink wavelength; verifying the received serial number; transmitting a message of successful registration to the ONU when verification is successful; and ending the process when the verification fails.

### SUMMARY

The following is a summary of a theme described in detail in the present invention. The summary is not intended to limit a protection scope of claims.

In a method for implementing registration in a relevant technology, when ONUs and OLTs do not belong to the same operator, the registration may fail; ONUs during registration and downlink frames containing bandwidth distribution information for transmitting serial numbers do not necessarily belong to the same operator; the ONUs need to try to register; and when the ONUs do not receive a message of successful registration of the OLTs in a preset duration, the ONUs may continue to perform a step of transmitting own stored serial numbers to the OLTs by using the searched uplink wavelength so as to try to register in the same TWDM channel again, and tune an own reception wavelength to a downlink wavelength corresponding to any one of other TWDM channels when the ONUs fail to register multiple times. Thus, a success rate of registration of the ONUs is relatively low.

The present invention proposes a method and apparatus for implementing registration, which can increase the success rate of registration.

A method for implementing registration includes: preconfiguring operator information in ONUs, and further includes:
tuning, by the ONUs, own reception wavelengths to a downlink wavelength corresponding to anyone of TWDM channels; and
receiving, from OLTs by the ONUs, downlink frames containing the operator information, judging that the operator information in the received downlink frames is same as preconfigured operator information, searching for an uplink wavelength corresponding to a current reception wavelength in a corresponding relationship between the uplink wavelength and the downlink wavelength received from the OLTs, and tuning own uplink wavelengths to the searched uplink wavelength for registration.

Optionally, the method further includes: searching, when the uplink wavelength corresponding to the current reception wavelength cannot be found in the corresponding relationship, for the uplink wavelength corresponding to the current reception wavelength in a re-received corresponding relationship.

Optionally, the tuning, by the ONUs, own uplink wavelengths to the searched uplink wavelength for registration includes:
receiving, from the OLTs by the ONUs, downlink frames containing bandwidth distribution information for transmitting serial numbers;
transmitting, by the ONUs, the own stored serial numbers to the OLTs by using the searched uplink wavelength; and
receiving, by the ONUs, a message of successful registration from the OLTs.

Optionally, after judging that the operator information in the received downlink frames is same as the preconfigured operator information, and before searching for the uplink wavelength corresponding to the current reception wavelength in the corresponding relationship received from the OLTs, the method further includes:
judging that the current TWDM channel can be used for registration.

Optionally, the judging that the current TWDM channel can be used for registration includes:
judging that information representing whether the current TWDM channel can be used for registration in the received downlink frames containing the operator information represents that the current TWDM channel can be used for registration.

Optionally, the method further includes: tuning the own reception wavelengths to the downlink wavelength corresponding to any one of other TWDM channels when judging that the current TWDM channel cannot be used for registration, or the downlink frames containing the bandwidth distribution information for transmitting the serial numbers are not received from the OLTs within the preset duration.

An apparatus for implementing registration includes:
a configuration module, configured to preconfigure operator information;
a tuning module, configured to tune own reception wavelengths to a downlink wavelength corresponding to anyone of TWDM channels;
a receiving module, configured to receive, from OLTs, downlink frames containing the operator information;
a searching module, configured to judge that the operator information in the received downlink frames is same as preconfigured operator information, and search for an uplink wavelength corresponding to a current reception wavelength in a corresponding relationship between the uplink wavelength and the downlink wavelength received from the OLTs; and
a registration module, configured to tune own uplink wavelengths to the searched uplink wavelength for registration.

Optionally, the searching module is further configured to:
search, when the uplink wavelength corresponding to the current reception wavelength cannot be found in the corresponding relationship, for the uplink wavelength corresponding to the current reception wavelength in a re-received corresponding relationship.

Optionally, the registration module is configured to:
receive, from the OLTs, downlink frames containing bandwidth distribution information for transmitting serial numbers, transmit the own stored serial numbers to the OLTs by using the searched uplink wavelength, and receive a message of successful registration from the OLTs.

Optionally, the searching module is configured to:
judge that the operator information in the received downlink frames is same as the preconfigured operator information, judge that the current TWDM channel can be used for registration, and search for the uplink wavelength corresponding to the current reception wavelength in the corresponding relationship.

Optionally, the tuning module is further configured to:
tune the own reception wavelengths to the downlink wavelength corresponding to any one of other TWDM channels when the searching module judges that the current TWDM channel cannot be used for registration, or the downlink frames containing the bandwidth distribution information are not received from the OLTs within the preset duration.

Optionally, the searching module is configured to:
judge that the operator information in the received downlink frames is same as the preconfigured operator information, judge that information representing whether the current TWDM channel can be used for registration in the received downlink frames containing the operator information represents that the current TWDM channel can be used for registration, and search for the uplink wavelength corresponding to the own reception wavelength in the corresponding relationship.

A computer-readable storage medium stores computer-executable instructions for executing any one of the above methods.

Compared with the relevant technology, the method in embodiments of the present invention includes: tuning the own reception wavelengths to a downlink wavelength corresponding to any one of the TWDM channels by the ONUs; receiving the downlink frames containing operator information from the OLTs, judging that the operator information in the received downlink frames is same as the preconfigured operator information, searching for an uplink wavelength corresponding to a current reception wavelength in a corresponding relationship between the uplink wavelength and the downlink wavelength received from the OLTs, and tuning own uplink wavelengths to the searched uplink wavelength for registration by the ONUs. Through a solution of embodiments of the present invention, the registration is performed only when judging that the operator information in the received downlink frames is same as the preconfigured operator information, without trying to register multiple times, thereby increasing the success rate of registration, avoiding trying to register in the wrong TWDM channel, and reducing confliction probability when different ONUs are registered in the same TWDM channel.

Further, when the ONUs judge that the current TWDM channel cannot be used for registration, or the downlink frames containing the bandwidth distribution information are not received from the OLTs within the preset duration, the own reception wavelengths are tuned to the downlink wavelength corresponding to any one of other TWDM channels for registration, without trying to register multiple times in the same TWDM channel, thereby increasing the success rate of registration and shortening registration time.

After reading and understanding drawings and detailed description, other aspects can be understood.

### BRIEF DESCRIPTION OF DRAWINGS

Fig. 1 is a topological structure diagram illustrating a PON system in a relevant technology;
Fig. 2 is a topological structure diagram illustrating a TWDM PON system in a relevant technology;
Fig. 3 is a flow chart illustrating a method for implementing registration in an embodiment of the present invention; and
Fig. 4 is a schematic diagram illustrating a structure composition of an apparatus for implementing registration in an embodiment of the present invention.

### DETAILED DESCRIPTION

Embodiments of the present invention are described below with reference to the drawings. It should be noted that embodiments in the present invention and features in embodiments can be combined with each other without conflict.

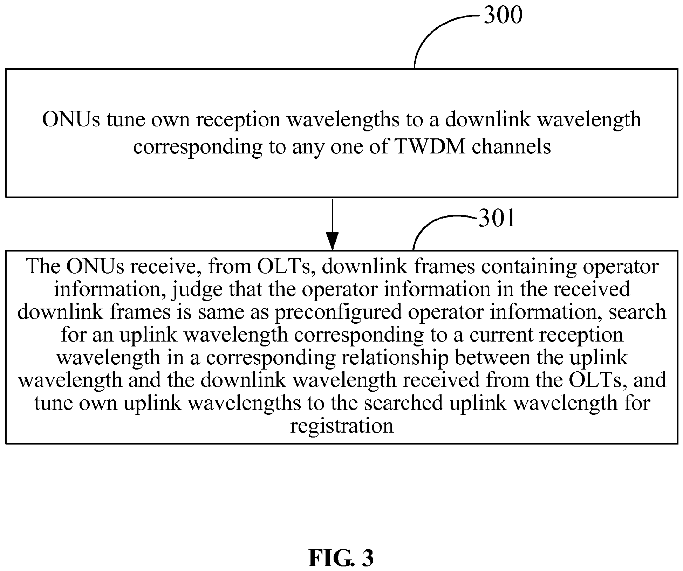

With reference to Fig. 3, embodiments of the present invention propose a method for implementing registration. The method includes: preconfiguring operator information in ONUs.

The operator information can be pre-stored in the ONUs.

The operator information may be any information representing an operator, such as an operator name, an operator identifier and the like.

The method further includes following steps.

In step 300, the ONUs tune own reception wavelengths to a downlink wavelength corresponding to anyone of TWDM channels; and

in step 301, the ONUs receive, from OLTs, downlink frames containing the operator information, judge that the operator information in the received downlink frames is same as preconfigured operator information, search for an uplink wavelength corresponding to a current reception wavelength in a corresponding relationship between the uplink wavelength and the downlink wavelength received from the OLTs, and tune own uplink wavelengths to the searched uplink wavelength for registration.

In the step, when the uplink wavelength corresponding to the current reception wavelength cannot be found in the corresponding relationship by the ONUs, the uplink wavelength corresponding to the current reception wavelength is searched in a re-received corresponding relationship.

In the step, the OLTs would periodically broadcast the corresponding relationship to the ONUs. The corresponding relationship contains a corresponding relationship of one or more TWDM channels. The ONUs can monitor the corresponding relationship transmitted by the OLTs after judging that the operator information in the received downlink frames is same as the preconfigured operator information.

In the step, the tuning own uplink wavelengths to the searched uplink wavelength for registration includes:

Receiving, from the OLTs, downlink frames containing bandwidth distribution information for transmitting serial numbers; transmitting own stored serial numbers to the OLTs by using the searched uplink wavelength; and receiving a message of successful registration from the OLTs.

After judging that the operator information in the received downlink frames is same as the preconfigured operator information, and before searching the uplink wavelength corresponding to the current reception wavelength in the corresponding relationship received from the OLTs, the step further includes:
judging that the current TWDM channel can be used for registration.

The judging that the current TWDM channel can be used for registration includes: judging that information representing whether the current TWDM channel can be used for registration in the received downlink frames containing the operator information represents that the current TWDM channel can be used for registration.

When judging that the current TWDM channel cannot be used for registration, or the downlink frames containing the bandwidth distribution information for transmitting the serial numbers are not received from the OLTs within a preset duration, the own reception wavelengths are tuned to the downlink wavelength corresponding to any one of other TWDM channels; and subsequent steps are performed continuously.

Embodiments of the present invention further provide a computer-readable storage medium storing computer-executable instructions for executing the method for implementing registration.

The present invention is described below in detail through embodiments.

The TWDM PON system has a plurality of TWDM channels. Each TWDM channel uses one downlink wavelength and one or more uplink wavelengths. In an Open Access mode network, a plurality of operators can share an ODN network of one TWDM PON system. Each operator can use one or more TWDM channels. In the TWDM PON system, when the OLTs use the downlink wavelength to transmit downlink frames, information of an operator to which the OLTs belong is carried. The ONUs store information of an operator to which the ONUs belong.

In a first embodiment, after the ONUs are connected to a PON, the own reception wavelengths are tuned to the downlink wavelength corresponding to any one of the TWDM channels. When the downlink frames containing the operator information from the OLTs are received, it is judged that the operator information in the received downlink frames is same as the pre-stored operator information, and the information representing whether the current TWDM channel can be used for registration in the received downlink frames represents that the current TWDM channel can be used for registration, the uplink wavelength corresponding to the current reception wavelength is searched in the corresponding relationship between the uplink wavelength and the downlink wavelength received from the OLTs, and own uplink wavelengths are tuned to the searched uplink wavelength for registration.

In the present embodiment, when judging that the information representing whether the current TWDM channel can be used for registration in the received downlink frames represents that the current TWDM channel cannot be used for registration, the own reception wavelengths are tuned to the downlink wavelength corresponding to any one of other TWDM channels.

In a second embodiment, after the ONUs are connected to the PON, the own reception wavelengths are tuned to the downlink wavelength corresponding to any one of the TWDM channels. When the downlink frames containing the operator information from the OLTs are received, and it is judged that the operator information in the received downlink frames is same as the pre-stored operator information, the uplink wavelength corresponding to the current reception wavelength is searched in the corresponding relationship between the uplink wavelength and the downlink wavelength received from the OLTs, and a timer is started at the same time. Before the timer expires, if the downlink frames containing the bandwidth distribution information for transmitting the serial numbers are received from the OLTs, the own stored serial numbers are transmitted to the OLTs by using the searched uplink wavelength, and the message of successful registration from the OLTs is received.

If the downlink frames containing the bandwidth distribution information for transmitting the serial numbers are not received from the OLTs after the timer expires, the own reception wavelengths are tuned to the downlink wavelength corresponding to any one of other TWDM channels.

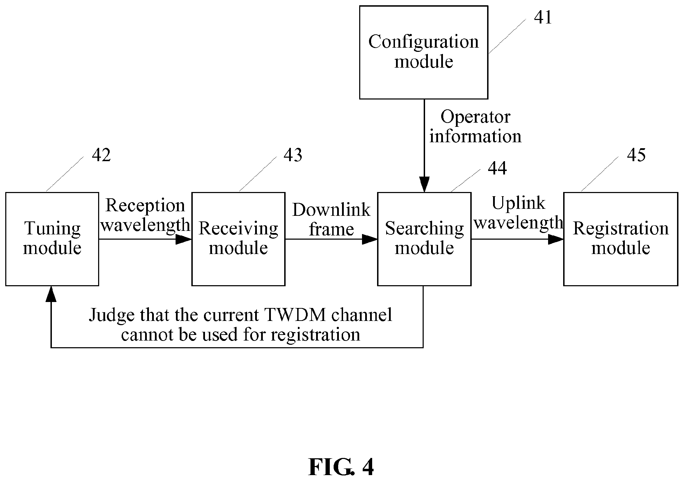

With reference to Fig. 4, embodiments of the present invention further propose an apparatus for implementing registration, including:
a configuration module 41, configured to preconfigure operator information;
a tuning module 42, configured to tune own reception wavelengths to a downlink wavelength corresponding to any one of TWDM channels;
a receiving module 43, configured to receive, from OLTs, downlink frames containing the operator information;
a searching module 44, configured to judge that the operator information in the received downlink frames is same as preconfigured operator information, and search for an uplink wavelength corresponding to a current reception wavelength in a corresponding relationship between the uplink wavelength and the downlink wavelength received from the OLTs; and
a registration module 45, configured to tune own uplink wavelengths to the searched uplink wavelength for registration.

In the apparatus of embodiments of the present invention, the searching module 44 is further configured to:
search, when the uplink wavelength corresponding to the current reception wavelength cannot be found in the corresponding relationship, for the uplink wavelength corresponding to the current reception wavelength in a re-received corresponding relationship.

In the apparatus of embodiments of the present invention, the registration module 45 is configured to:
receive, from the OLTs, downlink frames containing bandwidth distribution information for transmitting serial numbers, transmit the own stored serial numbers to the OLTs by using the searched uplink wavelength, and receive a message of successful registration from the OLTs.

In the apparatus of embodiments of the present invention, the searching module 44 is configured to:
judge that the operator information in the received downlink frames is same as the preconfigured operator information, judge that the current TWDM channel can be used for registration, and search for the uplink wavelength corresponding to the current reception wavelength in the corresponding relationship.

In the apparatus of embodiments of the present invention, the searching module 44 is configured to:
judge that the operator information in the received downlink frames is same as the preconfigured operator information, judge that information representing whether the current TWDM channel can be used for registration in the received downlink frames containing the operator information represents that the current TWDM channel can be used for registration, and search for the uplink wavelength corresponding to the own reception wavelength in the corresponding relationship.

In the apparatus of embodiments of the present invention, the tuning module 42 is further configured to:
tune the own reception wavelengths to the downlink wavelength corresponding to any one of other TWDM channels when the searching module 44 judges that the current TWDM channel cannot be used for registration, or the downlink frames containing the bandwidth distribution information are not received from the OLTs within the preset duration.

Those ordinary skilled in the art can understand that all or a portion of the steps of above embodiments can be implemented by using computer programs flows. The computer programs can be stored in a computer-readable storage medium. The computer programs are executed in corresponding hardware platforms (such as systems, equipment, apparatuses, devices and the like), and include one or a combination of steps of embodiments of the method during execution.

Optionally, all or a portion of the steps of above embodiments can also be implemented by using an integrated circuit. The steps can be implemented by respectively making the steps into individual integrated circuit modules, or making a plurality of modules or steps into a single integrated circuit module.

The apparatuses/functional modules/functional units in above embodiments can be implemented by using general-purpose computing apparatuses, can be concentrated on a single computing apparatus and can also be distributed in a network composed of a plurality of computing apparatuses.

The apparatuses/functional modules/functional units in above embodiments can be implemented in a form of software function module, and can be stored in one computer-readable storage medium when sold or used as separate products. The above-mentioned computer-readable storage medium may be a read-only memory, a magnetic disk, an optical disk or the like.

### INDUSTRIAL APPLICABILITY

Through embodiments of the present invention, the registration is performed only when judging that the operator information in the received downlink frames is same as the preconfigured operator information, without trying to register multiple times, thereby increasing the success rate of registration, avoiding trying to register in the wrong TWDM channel, and reducing confliction probability when different ONUs are registered in the same TWDM channel. Moreover, when the ONUs judge that the current TWDM channel cannot be used for registration, or the downlink frames containing the bandwidth distribution information are not received from the OLTs within the preset duration, the own reception wavelengths are tuned to the downlink wavelength corresponding to any one of other TWDM channels for registration, without trying to register multiple times in the same TWDM channel, thereby increasing the success rate of registration and shortening registration time.

## Claims

1. A method for implementing registration, comprising: preconfiguring operator information in Optical Network Units, ONUs, and further comprising:
tuning, by the ONUs, own reception wavelengths to a downlink wavelength corresponding to any one of Time-Wavelength Division Multiplexing ,TWDM, channels; and
receiving, from Optical Line Terminals, OLTs, by the ONUs, downlink frames containing the operator information, judging that the operator information in the received downlink frames is same as preconfigured operator information, searching for an uplink wavelength corresponding to a current reception wavelength in a corresponding relationship between the uplink wavelength and the downlink wavelength received from the OLTs, and tuning own uplink wavelengths to the searched uplink wavelength for registration.

2. The method according to claim 1, further comprising: searching, when the uplink wavelength corresponding to the current reception wavelength cannot be found in the corresponding relationship, for the uplink wavelength corresponding to the current reception wavelength in a re-received corresponding relationship.

3. The method according to claim 1 or 2, wherein the tuning, by the ONUs, own uplink wavelengths to the searched uplink wavelength for registration comprises:
receiving, from the OLTs by the ONUs, downlink frames containing bandwidth distribution information for transmitting serial numbers;
transmitting, by the ONUs, the own stored serial numbers to the OLTs by using the searched uplink wavelength; and
receiving, by the ONUs, a message of successful registration from the OLTs.

4. The method according to claim 1 or 2, after judging that the operator information in the received downlink frames is same as the preconfigured operator information, and before searching for the uplink wavelength corresponding to the current reception wavelength in the corresponding relationship received from the OLTs, further comprising:
judging that the current TWDM channel can be used for registration.

5. The method according to claim 4, wherein the judging that the current TWDM channel can be used for registration comprises:
judging that information representing whether the current TWDM channel can be used for registration in the received downlink frames containing the operator information represents that the current TWDM channel can be used for registration.

6. The method according to claim 4, further comprising: tuning the own reception wavelengths to the downlink wavelength corresponding to any one of other TWDM channels when judging that the current TWDM channel cannot be used for registration, or the downlink frames containing the bandwidth distribution information for transmitting the serial numbers are not received from the OLTs within the preset duration.

7. An apparatus for implementing registration, comprising:
a configuration module, configured to preconfigure operator information;
a tuning module, configured to tune own reception wavelengths to a downlink wavelength corresponding to anyone of TWDM channels;
a receiving module, configured to receive, from OLTs, downlink frames containing the operator information;
a searching module, configured to judge that the operator information in the received downlink frames is same as preconfigured operator information, and search for an uplink wavelength corresponding to a current reception wavelength in a corresponding relationship between the uplink wavelength and the downlink wavelength received from the OLTs; and
a registration module, configured to tune own uplink wavelengths to the searched uplink wavelength for registration.

8. The apparatus according to claim 7, wherein the searching module is further configured to:
search, when the uplink wavelength corresponding to the current reception wavelength cannot be found in the corresponding relationship, for the uplink wavelength corresponding to the current reception wavelength in a re-received corresponding relationship.

9. The apparatus according to claim 7 or 8, wherein the registration module is configured to:
receive, from the OLTs, downlink frames containing bandwidth distribution information for transmitting serial numbers, transmit the own stored serial numbers to the OLTs by using the searched uplink wavelength, and receive a message of successful registration from the OLTs.

10. The apparatus according to claim 7, wherein the searching module is configured to:
judge that the operator information in the received downlink frames is same as the preconfigured operator information, judge that the current TWDM channel can be used for registration, and search for the uplink wavelength corresponding to the current reception wavelength in the corresponding relationship.

11. The apparatus according to claim 10, wherein the tuning module is further configured to:
tune the own reception wavelengths to the downlink wavelength corresponding to any one of other TWDM channels when the searching module judges that the current TWDM channel cannot be used for registration, or the downlink frames containing the bandwidth distribution information are not received from the OLTs within the preset duration.

12. The apparatus according to claim 7, wherein the searching module is configured to:
judge that the operator information in the received downlink frames is same as the preconfigured operator information, judge that information representing whether the current TWDM channel can be used for registration in the received downlink frames containing the operator information represents that the current TWDM channel can be used for registration, and search for the uplink wavelength corresponding to the own reception wavelength in the corresponding relationship.

13. A computer-readable storage medium storing computer-executable instructions for executing the method of any one of claims 1-6.
